# DEMANDE DE BREVET EUROPEEN

(11) **EP 2 567 606 A1**
(43) Date de publication de la demande: **13.03.2013**
(21) Numéro de dépôt: 12182939.4
(22) Date de dépôt: 04.09.2012
(51) Int. Cl.: A01C 15/00, A01C 3/06

(54) **Volet pour dispositif d'épandage**

(30) Priorité: 08.09.2011 BE 201100531
(71) Demandeur: Ets. Joskin S.A., 4000 Liege (BE)
(72) Inventeur: Joskin, Victor, B-4633 Melen (BE)
(74) Mandataire: pronovem

(57) **Abrégé**

La présente invention se rapporte à un dispositif d'épandage (4) muni d'un cadre fixe, d'organes rotatifs tranchants et éparpilleurs ou hérissons et d'un volet comprenant deux battants articulés (5, 5'), chacun constitué d'un panneau primaire (6) et au moins un panneau secondaire (7), le panneau primaire (6) et le ou les panneaux secondaires (7) étant reliés deux par deux par une charnière (9) selon un axe essentiellement vertical. Ledit dispositif d'épandage comprend un embiellage (11) adapté pour ouvrir de manière continue et indépendante chacun des deux battants articulés (5, 5') vers l'extérieur, d'une position initiale totalement fermée de protection vis-à-vis des hérissons ou de transport à une position finale totalement ouverte pour l'épandage en plein champ, de manière telle que l'angle formé entre le panneau primaire (6) et chacun des panneaux secondaires (7) augmente, respectivement diminue automatiquement lorsque le battant correspondant (5, 5') s'ouvre, respectivement se ferme et que la matière projetée par le dispositif d'épandage ne puisse atteindre les battants (5, 5') en position totalement ouverte

## Description

### Objet de l'invention

La présente invention s'applique au domaine des matériels d'épandage des engrais organiques solides et autres matières assimilées.

Elle concerne particulièrement un dispositif de capotage de l'installation d'épandage offrant l'une ou plusieurs des trois fonctions suivantes: primo, prévenir le contact contre les pièces saillantes et tranchantes de l'installation d'épandage, secundo, limiter la largeur d'épandage pour le travail en bordure de parcelle, tertio, rabattre la matière projetée par le dispositif d'épandage vers une table d'épandage inférieure.

### Etat de la technique

Par souci de sécurité, il s'impose dans les discussions menées au sein des instances de normalisation de pourvoir les épandeurs de fumier et matières assimilées, d'une protection empêchant le contact avec les pièces saillantes et coupantes à la périphérie extérieure du dispositif d'épandage lorsque ce dernier n'est pas en fonction.

Par ailleurs, par souci environnemental mais aussi pour des raisons économiques, il s'avère souvent avantageux de doter les épandeurs d'un dispositif permettant d'empêcher la projection de matière épandue en dehors de la parcelle traitée, à cause de la présence d'habitations, de cours d'eau, de cultures d'un autre type, etc.

Enfin, l'épandage de matières légères et friables comme le compost fait appel à une hotte arrière, sorte de caisson rabattant la matière projetée par les rouleaux éparpilleurs du dispositif d'épandage vers une table inférieure composée de deux assiettes rotatives munies de pales d'éjection, lesquelles réalisent une distribution large, très aérée et à dose limitée.

Si des solutions brevetées ne semblent pas exister, on connaît déjà cependant différents dispositifs de capotage de dispositif d'épandage faisant par exemple appel à un panneau, de forme généralement plate ou légèrement concave, basculant autour d'un axe horizontal pour se placer à l'arrière du dispositif d'épandage ou au contraire s'écarter de celui-ci afin d'autoriser la projection de la matière à épandre. Parmi ces dispositifs, certains présentent une articulation intermédiaire visant à ne libérer qu'une partie de la hauteur de projection du dispositif d'épandage afin de rabattre la matière à épandre vers un dispositif inférieur d'éparpillage; on parle alors de hotte déflectrice réglable.

Par ailleurs, on connaît divers dispositifs de volet latéral, de forme généralement plate ou légèrement concave, disposé aux extrémités latérales arrières du dispositif d'épandage et pivotant autour d'un axe vertical pour recouvrir partiellement ou s'avancer partiellement au delà de l'un des moulins éparpilleurs, encore appelés hérissons, du dispositif d'épandage afin d'empêcher la projection de matière vers le côté de la parcelle situé du côté du moulin ainsi couvert, ou au contraire s'écarter du dispositif d'épandage vers l'extérieur de la caisse afin d'autoriser la projection de la matière à épandre sur la plus grande largeur possible. Pareil dispositif de volet de bordure est par exemple présenté par le constructeur Buchet (F-71740 Tancon) qui propose un volet de bordure composé de deux panneaux articulés commandés par un jeu de deux vérins hydrauliques à action décalée.

D'autres dispositifs similaires, plutôt destinés fondamentalement à prévenir le contact contre le dispositif d'épandage, sont conçus comme une paire de volets disposés de part et d'autre du dispositif d'épandage, similaires au volet décrit ci-avant, à ceci près que chaque volet est composé d'un seul panneau rigide, présentant éventuellement un profil incurvé ou muni d'un angle. Parmi ces volets de protection, certains sont munis d'un dispositif permettant de stopper le pivotement après un certain arc de rotation en sorte que le volet de protection fasse office de volet de bordure, c'est-à-dire de déflecteur limitant la projection de la matière vers le côté de la machine jusqu'à une certain angle en sorte que la matière ne se dépose pas en dehors de la parcelle traitée.

Enfin, on connaît des volets latéraux disposés de part et d'autre du dispositif d'épandage le long des parois extérieures de la caisse de transport de l'épandeur et coulissant vers l'arrière en saillie par rapport au dispositif d'épandage pour faire office de volet de bordure ainsi qu'expliqué au paragraphe précédent.

Les limites de ces réalisations sont multiples, comme on peut le voir ci-après.

Les capots pivotant autour d'un axe horizontal sont incapables de faire office de volet de bordure et leur amplitude de développement lors du basculement peut s'avérer problématique dans certains cas (présence de lignes électriques, difficulté d'ouverture en atelier pour la maintenance, etc.). En outre, s'ils doivent conserver une position ouverte pour l'épandage de plein champ, leur structure doit être extrêmement robuste, ce qui entraîne un supplément relativement important de coût et de poids.

Les volets de protection pivotant latéralement remplissent généralement bien leur office de protection arrière vis-à-vis du dispositif d'épandage au repos mais se révèlent gênants pendant l'épandage lui-même lorsque leur arc d'ouverture est insuffisant, même lorsque cet arc d'ouverture insuffisant est spécifiquement prévu pour réaliser une fonction de volet de bordure.

Si pareil volet à pivotement autour d'un axe vertical est plat ou quasi-plat, il faut s'attendre à ce que l'arête arrière du cadre de structure dans lequel est enserré le dispositif d'épandage soit située aux environs du plan (quasi-)vertical défini par l'extrémité extérieure de la pièce la plus écartée du centre de l'axe de rotation du dispositif d'épandage; dès lors, une partie de la matière projetée s'agglutine sur ce cadre, gênant l'épandage et/ou tombant par paquets au pied du cadre, réalisant un épandage de mauvaise qualité.

Pour pallier le phénomène décrit ci-avant, on connaît des dispositifs d'épandage dont le cadre est avancé vers la caisse de transport et pourvu de volets latéraux de forme concave en sorte que leur premier segment « tourne » autour du dispositif d'épandage lors de la fermeture des volets. Lorsque ces volets sont en position ouverte, il est quasiment inévitable, en vertu de la forme concave des volets, que leur extrémité demeure dans le champs de projection de la matière, freinant ou bloquant celle-ci dans sa course, en sorte que la portion de matière heurtant les volets latéraux tombe également par paquets au pied des volets, réalisant un épandage de mauvaise qualité.

Pareil phénomène est à tout le moins inévitable lorsque le volet a pivoté en position semi-ouverte pour faire office de volet de bordure ainsi que décrit plus haut.

Le fabricant Buchet a présenté une solution à ce problème en concevant un volet, exclusivement de bordure donc non destiné à prévenir le contact contre le dispositif d'épandage, composé d'un battant unique (c'est-à-dire d'un seul côté de la caisse) à deux panneaux articulés dont le panneau secondaire, soit le plus écarté du pivot d'ouverture, se replie à 90° vers l'extérieur par rapport au panneau primaire, soit le panneau fixé en rotation sur le cadre du dispositif d'épandage. Dès lors, en position d'épandage en plein champ, le panneau secondaire est orienté vers l'avant de la remorque et ne peut gêner l'épandage.

Chez Buchet, la commande de ce volet articulé est réalisée au moyen de deux vérins hydrauliques à action différée. A l'ouverture du volet, le panneau secondaire est d'abord tourné à 90° par rapport au panneau primaire, puis c'est le panneau primaire qui pivote. A la fermeture, c'est l'inverse. Ceci est réalisé par un circuit hydraulique combiné à distribution différée auquel sont asservis les deux vérins. Il n'y a donc pas de position intermédiaire: le volet est tout ouvert ou totalement fermé, c'est-à-dire au plus proche du dispositif d'épandage.

A la limite, on pourrait modifier la solution Buchet en sorte que la rotation des panneaux puissent être stoppée par une action de commande manuelle. Une telle action de commande serait cependant (quasi) impossible à maîtriser depuis le poste de conduite du charroi, d'abord parce que, depuis ce poste, la visibilité sur l'arrière du charroi est nulle ou quasi nulle, ensuite parce que l'opérateur devrait agir sur deux vérins hydrauliques par battant, d'où une grande difficulté de gérer une position angulaire correcte et précise.

Dans le cas particulier de la solution Buchet, pareille « amélioration » serait de toute façon inutile car c'est dans la position la plus proche du dispositif d'épandage que le volet fait office de déflecteur de bordure, c'est-à-dire qu'il empêche la projection de matière vers son côté du champ. Ceci constitue une première limite du dispositif: puisque ce volet ne dispose que d'une seule position de travail de bordure, il ne peut s'utiliser qu'en déplaçant l'épandeur de fumier le long de la limite de parcelle. L'opérateur manque donc d'un certain degré de flexibilité: par exemple lorsque la largeur totale de la parcelle ne correspond pas à un multiple de la largeur d'épandage en plein champ, augmenté de la largeur d'épandage de bordure, il subsistera une portion de parcelle qui n'aura pas reçu la dose d'engrais organique voulue ou, si l'opérateur fait un passage supplémentaire pour fumer cette portion restante, il y aura une autre portion de parcelle qui aura reçu une dose d'engrais supérieure au reste de la parcelle.

La position de travail en bordure du volet Buchet induit une seconde limite. Puisque le volet de bordure est tout contre le dispositif d'épandage, couvrant partiellement l'un des hérissons éparpilleurs, la matière projetée par le hérisson couvert est déviée par le volet. Une - faible - partie risque d'être retenue par le volet et de tomber au pied de l'épandeur sans être correctement éparpillée, ce qui constitue un premier problème. Surtout, la majeure partie de la matière projetée par le hérisson couvert est détournée dans le flux projeté par l'autre hérisson sous un angle traversant ce flux; il s'ensuit une modification radicale du diagramme d'épandage puisque le flux de l'autre hérisson est perturbé par les projections en provenance du hérisson couvert et que le débit normalement destiné au côté couvert s'ajoute à celui du côté non couvert. Le volume projeté est réparti sur l'ensemble de la largeur, et c'est donc sur l'ensemble de la largeur traitée que change la répartition, et non simplement le côté de la bordure. D'où un risque de surdosage sur une zone élargie.

### Buts de l'invention

Dès lors, l'invention vise à proposer un dispositif qui permette de s'affranchir des inconvénients de l'état de la technique.

L'invention a encore pour buts de proposer un système de protection du dispositif d'épandage au repos, permettant également de ne pas gêner l'épandage en plein champ et de limiter la largeur d'épandage au travail, par exemple en bordure de parcelle, sans nuire à la qualité d'épandage.

Dans un mode d'exécution particulier, l'invention a encore pour but de proposer un dispositif pouvant être utilisé comme hotte déflectrice.

### Principaux éléments caractéristiques de l'invention

La présente invention a pour objet de proposer un dispositif de capotage à deux battants conçus pour ne pas gêner l'épandage de plein champ, n'être commandés que par un seul moyen de puissance par battant et régler automatiquement la position correcte de la section terminale de chaque battant en fonction de son degré d'ouverture par rapport à l'installation d'épandage.

Cet objectif est atteint en mettant en oeuvre un dispositif d'épandage muni d'un volet composé de deux battants latéraux respectivement disposés de part et d'autre du dispositif d'épandage et pivotant autour d'un axe (quasi-)vertical au moyen d'un système de puissance quelconque permettant à l'opérateur d'arrêter le pivotement de chaque battant séparément après rotation selon un arc de son choix. Le dispositif de l'invention est caractérisé en ce que :
- chaque battant est composé d'au moins deux panneaux de forme plane ou quasi plane reliés l'un à l'autre par une articulation quelconque, et que
- l'angle formé par cette articulation est piloté par un embiellage composé d'un ensemble de bielles.
Ces bielles présentent chacune une longueur spécifique, de préférence distincte, sont en nombre supérieur d'une unité au nombre de panneaux d'un battant, ont toutes leurs extrémités fixées au moyen d'un dispositif pivotant quelconque, une extrémité de chaque bielle étant liée à un axe commun de pivotement intermédiaire, l'autre extrémité étant liée à un panneau du battant, la seconde extrémité de la bielle supplémentaire étant liée au cadre du dispositif d'épandage.

Plus particulièrement, selon les termes de la revendication 1, l'invention se rapporte à un dispositif d'épandage muni d'un cadre fixe, d'organes rotatifs tranchants et éparpilleurs ou hérissons et d'un volet comprenant deux battants articulés, montés pivotants par rapport audit cadre autour d'un axe essentiellement vertical, chacun de ces battants étant constitué d'un panneau primaire et au moins un panneau secondaire, le panneau primaire et le ou les panneaux secondaires étant reliés deux par deux par une charnière selon un axe vertical également, un moyen de puissance étant associé à l'ouverture et la fermeture de chaque battant, caractérisé en ce que ledit dispositif d'épandage comprend un embiellage adapté pour ouvrir de manière continue et indépendante chacun des deux battants articulés vers l'extérieur, d'une position initiale totalement fermée de protection vis-à-vis des hérissons ou de transport à une position finale totalement ouverte pour l'épandage en plein champ, de manière telle que l'angle formé entre le panneau primaire et chacun des panneaux secondaires augmente, respectivement diminue automatiquement lorsque le battant correspondant s'ouvre, respectivement se ferme et que la matière projetée par le dispositif d'épandage ne puisse atteindre les battants en position totalement ouverte.

Des modes de réalisation particuliers de l'invention comprennent en outre une -ou une combinaison appropriée- des caractéristiques mentionnées dans les revendications dépendantes. Notamment, des modes d'exécution particuliers comprennent les caractéristiques complémentaires suivantes, ensemble ou séparément :
- l'un des battants comporte, à l'extrémité verticale libre opposée à sa charnière, une battée qui, lorsque le volet est fermé, déborde sous le panneau secondaire du battant opposé, ce dernier pouvant quant à lui être pourvu d'une contre-battée;
- au moins une bielle d'un battant est constituée ou munie d'un moyen de puissance quelconque, piloté indépendamment du pilotage d'ouverture du battant.

Enfin, l'invention se rapporte également à l'utilisation d'un dispositif d'épandage comme décrit ci-dessus soit pour l'épandage de fumier et matières assimilées, soit pour l'épandage de compost et matières organiques friables et légères.

### Brève description des figures

Des exemples de réalisation suivant l'invention sont décrits par la suite avec plus de détails à l'aide des figures annexées.

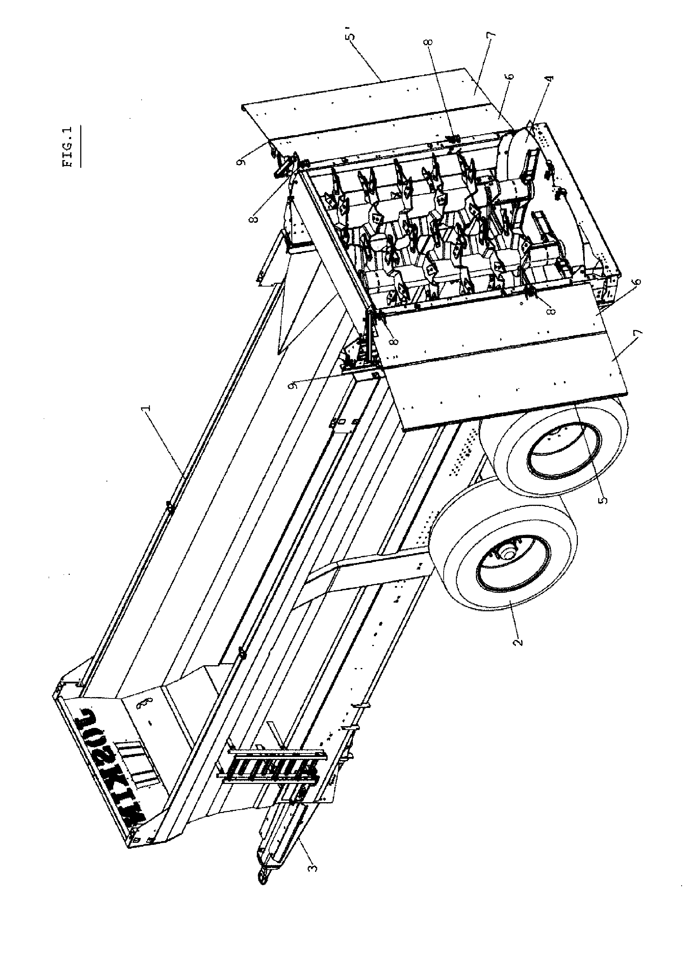

La Figure 1 montre une vue générale en perspective d'un dispositif d'épandage monté sur une remorque quelconque destinée au transport de la matière à épandre - communément appelée « épandeur de fumier » sans que pareille remorque soit spécifiquement limitée à l'épandage du fumier proprement dit - et équipé d'un volet selon l'invention, illustré dans une position totalement ouverte correspondant à la position normale de travail en plein champ de l'épandeur de fumier.

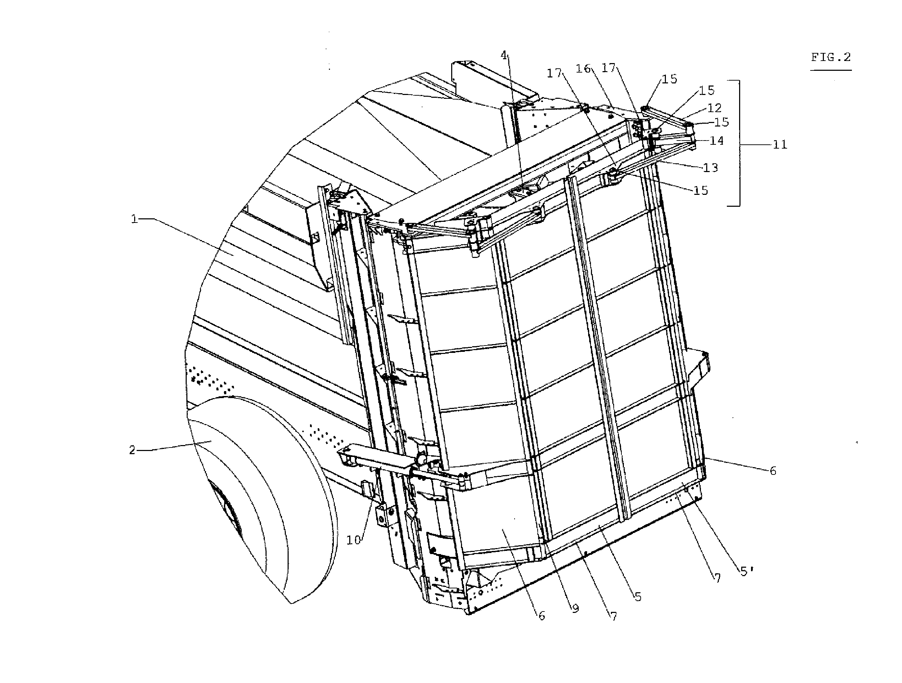

La Figure 2 montre une vue en perspective plus concentrée sur le même dispositif d'épandage équipé d'un volet selon l'invention, illustré ici dans une position totalement fermée correspondant à sa fonction de protection dans la position d'arrêt ou de transport de l'épandeur de fumier.

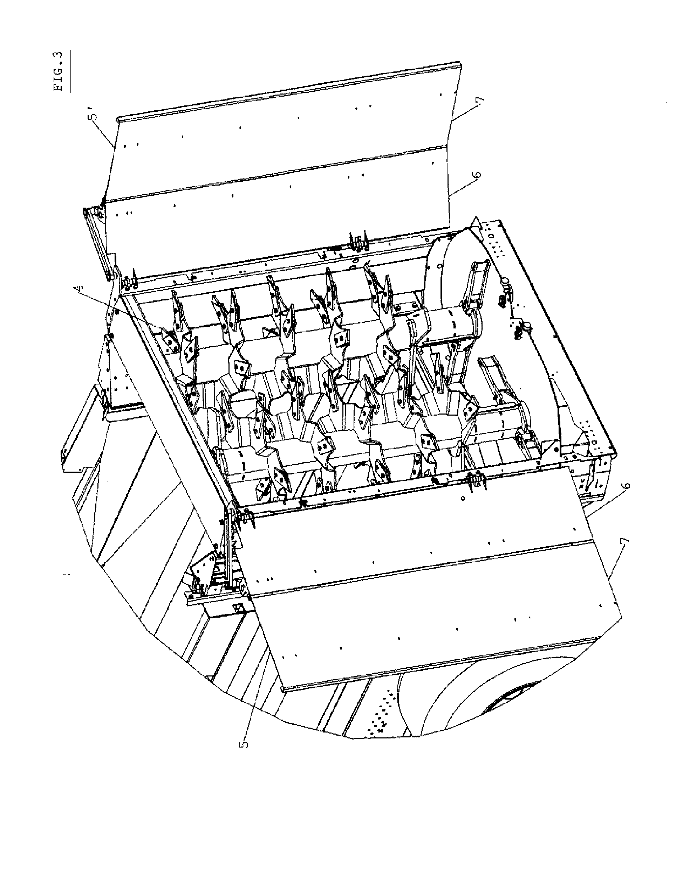

La Figure 3 montre une vue similaire à la précédente du même dispositif d'épandage équipé d'un volet selon l'invention, illustré ici dans une position où l'un des battants est totalement ouvert, l'autre étant partiellement ouvert, ce qui correspond à la position de travail de l'épandeur de fumier en bordure de parcelle.

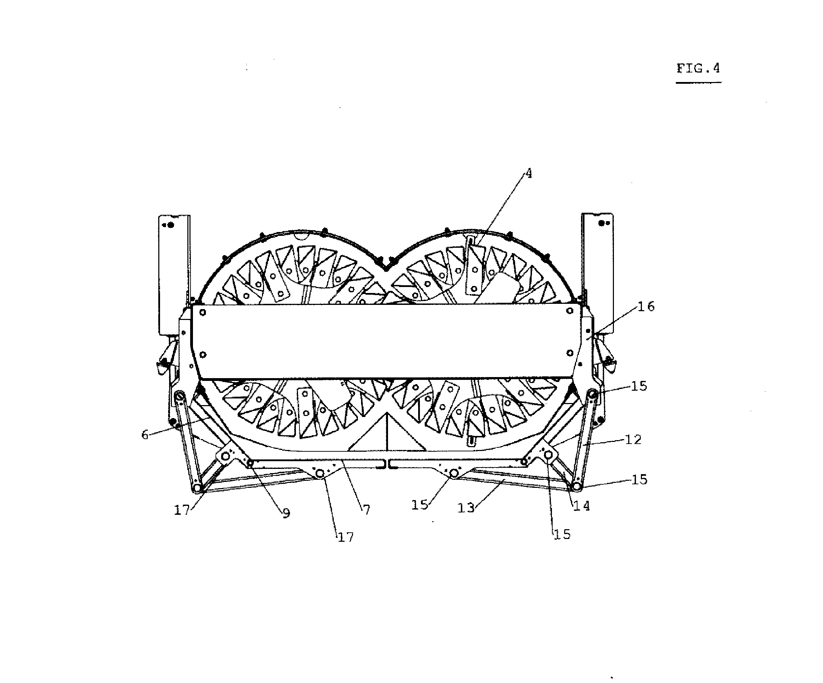

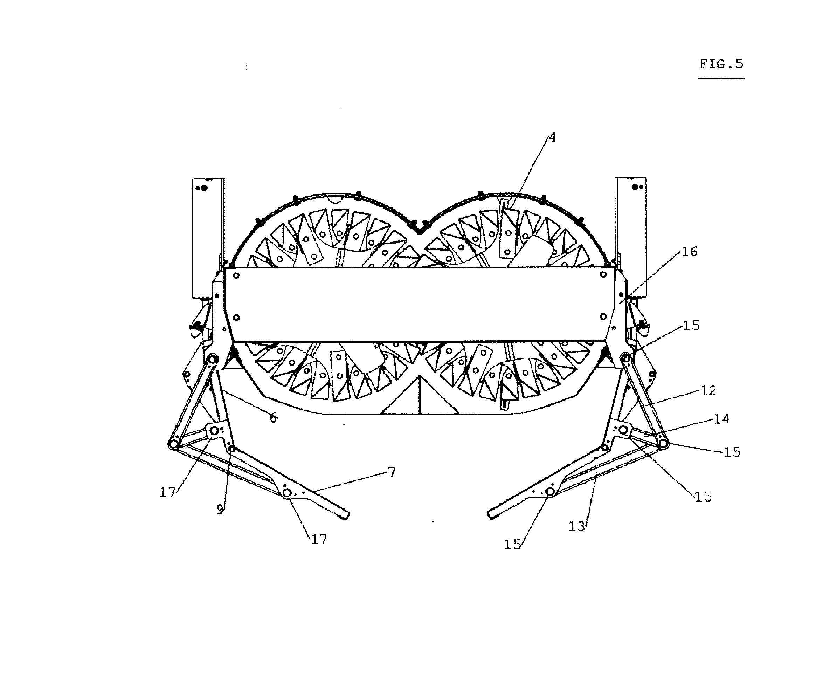

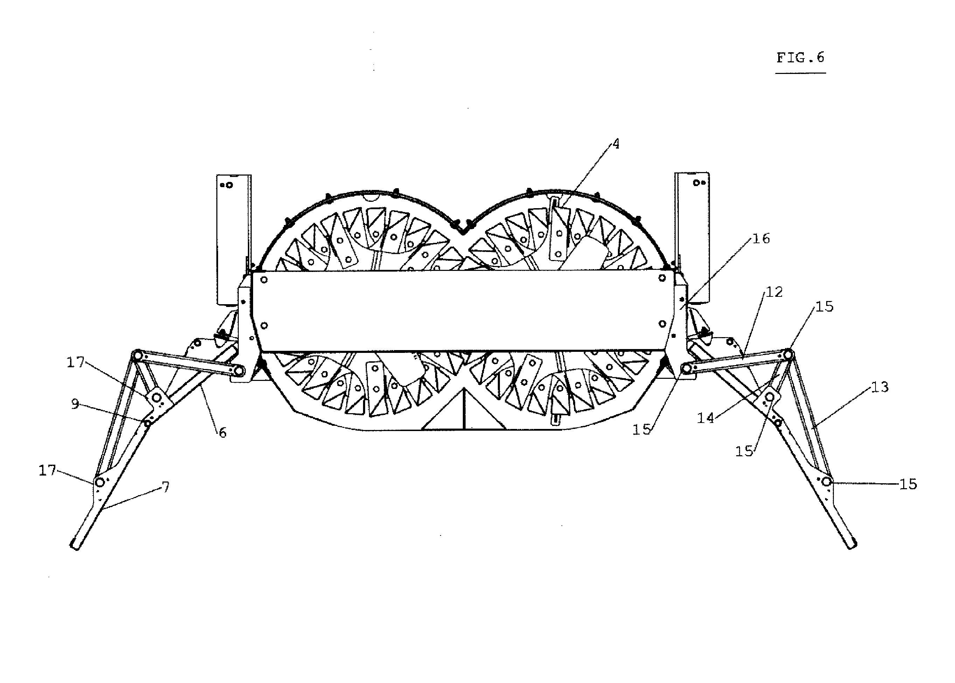

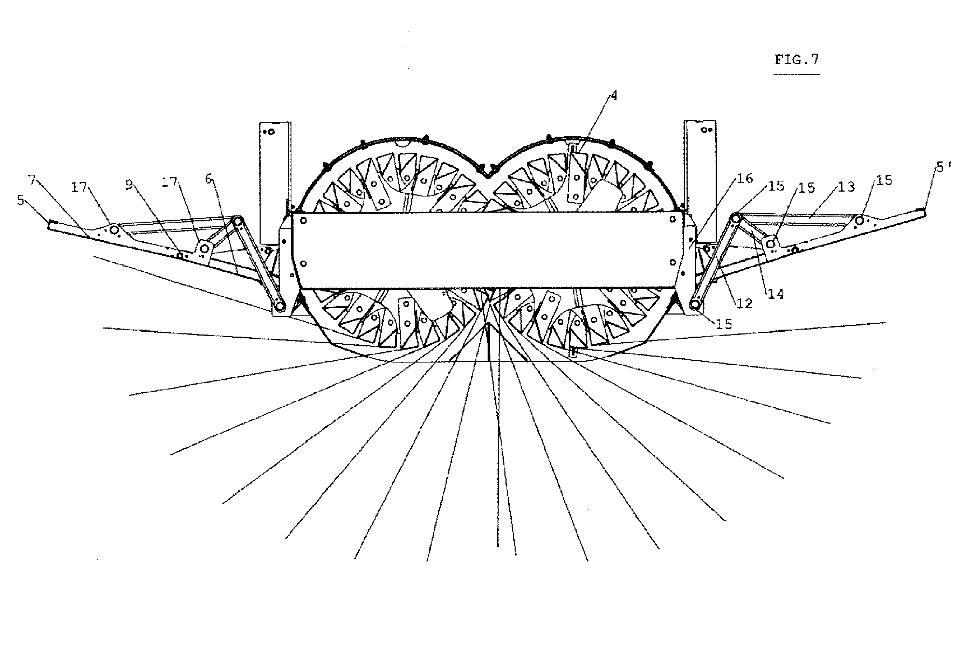

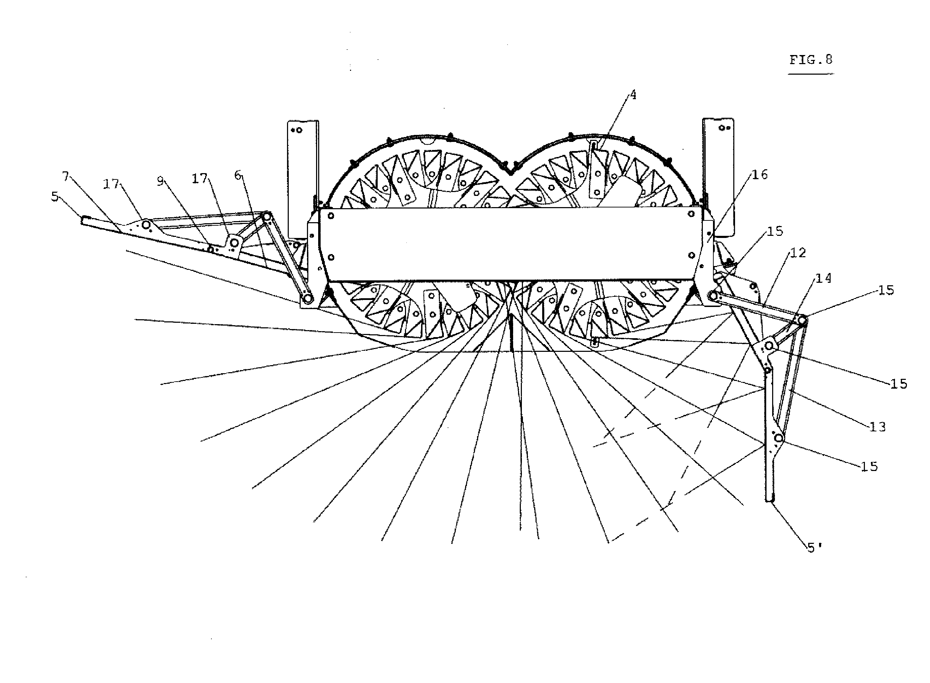

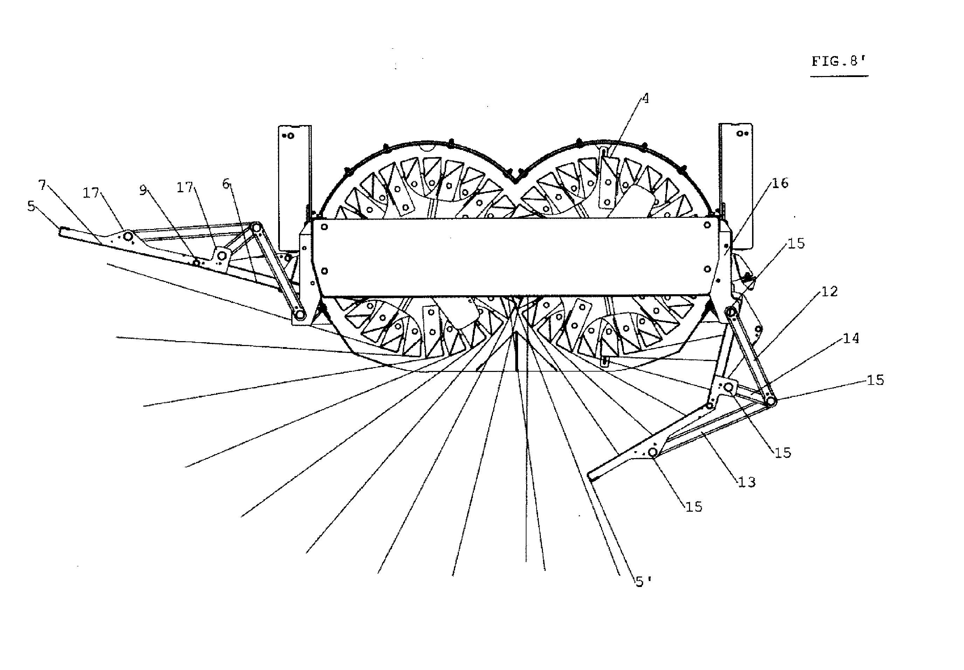

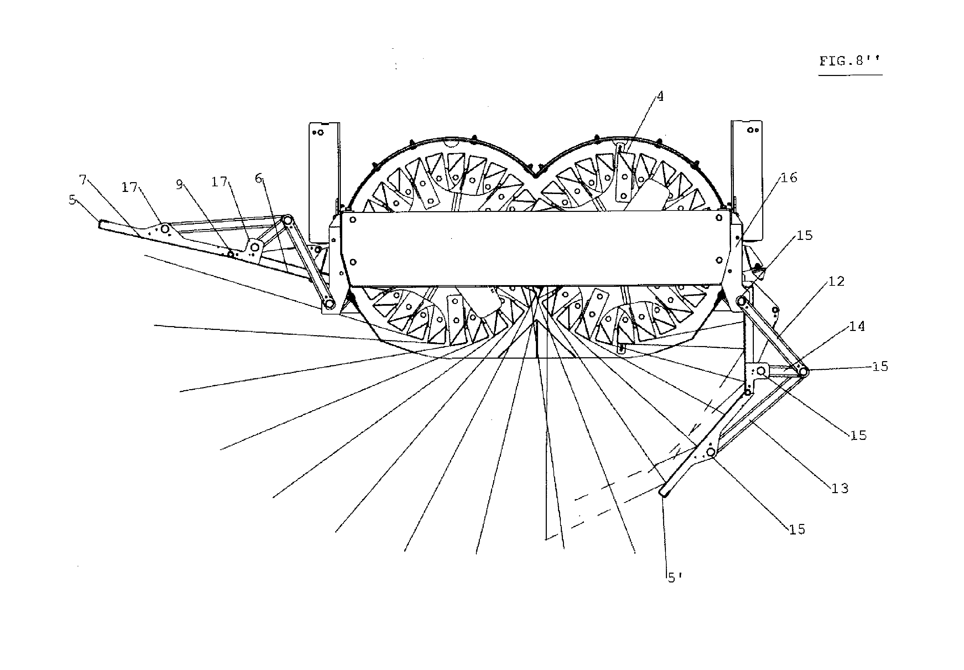

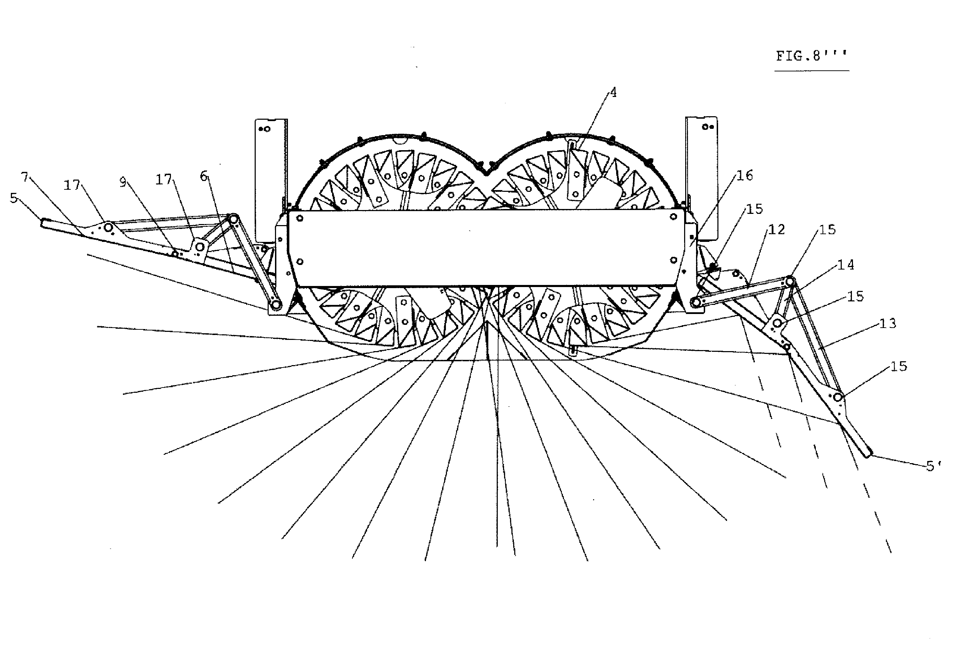

Les Figures 4 à 8"' montrent des vues en plan d'un dispositif d'épandage équipé d'un volet selon l'invention. En Figure 4, le volet est fermé comme illustré en Figure 2. En Figures 5 et 6, le volet est en phase d'ouverture, l'angle d'ouverture étant plus important en Figure 6 qu'en Figure 5. En Figure 7, le volet est complètement ouvert, cette position correspondant à une configuration d'épandage en plein champ. En Figure 8, le volet est en position correspondant à une position de travail de l'épandeur de fumier en bordure de parcelle comme illustré en Figure 3. Les figures 8', 8" et 8"' illustrent quelques-unes parmi les multiples autres positions de travail en bordure de parcelle.

L'invention est explicitée à la suite au moyen d'une description non limitative de certains éléments de détail.

### Description détaillée de l'invention

Les objectifs visés par l'invention sont atteints grâce à un volet composé essentiellement de deux battants articulés disposés en pivotement autour d'un axe vertical respectivement de part et d'autre du dispositif d'épandage monté à l'arrière d'une caisse de transport, et actionnés par un embiellage combiné guidant automatiquement les battants articulés en bonne position angulaire suivant leur position d'ouverture par rapport au dispositif d'épandage.

Chaque battant est dimensionné pour couvrir une partie complémentaire de la largeur dudit dispositif d'épandage, de préférence la moitié de la largeur. Il est composé de deux panneaux, l'un, dit primaire, situé du côté de la charnière du battant, l'autre, dit secondaire, situé du côté libre et externe du battant, assemblés l'un à l'autre au moyen d'une articulation verticale quelconque, en sorte que les arêtes supérieures des panneaux peuvent soit être alignées, soit former un angle quelconque.

Les panneaux sont dimensionnés pour couvrir plus ou moins la hauteur du dispositif d'épandage; d'un point de vue industriel, les panneaux seront avantageusement de largeur égale mais ce paramètre n'est pas un élément caractéristique de l'invention, l'important étant que la largeur cumulée des quatre panneaux composant les deux battants du volet soit à même de couvrir le dispositif d'épandage dans la position angulaire prévue pour la position fermée du volet; en vertu de la forme et du volume du dispositif d'épandage, il peut donc être nécessaire de prévoir des panneaux primaires de largeur différente de celle des panneaux secondaires. Pour des applications particulières, il pourrait aussi se justifier de prévoir des battants de largeur différente.

Chaque battant est actionné individuellement au moyen d'un système de puissance quelconque, par exemple un vérin hydraulique, liant le panneau primaire à un élément structurel fixe du dispositif d'épandage ou du véhicule porteur.

La position angulaire du panneau primaire par rapport au panneau secondaire de chaque battant est déterminée par un embiellage liant les deux panneaux. Cet embiellage est conçu comme un compas à correction progressive et est composé essentiellement d'une bielle primaire, d'une bielle secondaire et d'un bras de correction. Ces trois composants ont une de leurs extrémités liée ensemble; la seconde extrémité du bras de correction est fixée aux environs de l'arête extérieure du panneau primaire, soit l'arête la plus éloignée de la charnière du battant; la seconde extrémité de la bielle primaire est fixée aux environs de l'axe de charnière du battant à l'aide d'un support fixé de manière solidaire au cadre du dispositif d'épandage, et la seconde extrémité de la bielle secondaire est fixée sur le panneau secondaire. Toutes ces fixations sont réalisées au moyen de dispositifs pivotants, permettant aux bielles et au bras correcteur de changer de position angulaire l'un par rapport aux autres.

La position exacte des fixations des bielles et du bras correcteur est déterminée à la fois par le gabarit du dispositif d'épandage et par l'angle voulu entre les deux panneaux du battant et correspondant aux différents angles d'ouverture de ce dernier. Dès lors que les bielles et le bras correcteur ne sont pas de longueur égale et qu'une extrémité de la bielle primaire n'est pas fixée au battant lui-même, l'angle formé par les deux panneaux d'un battant se modifiera à mesure que le battant pivote. Les fixations des extrémités non liées entre elles des bielles et du bras correcteur sont donc positionnées en sorte que, lorsqu'il est en position fermée, le battant présente, à la jonction de ses deux panneaux, un angle obtus « épousant » le gabarit du dispositif d'épandage, que cet angle augmente progressivement à mesure que le battant pivote dans le sens de l'ouverture, afin d'utiliser le battant comme déflecteur aux fins de limitation de la largeur d'épandage (volet de bordure), et que cet angle atteigne au moins 150° à partir d'un certain degré d'ouverture du battant en fin de plage de déflexion, angle qui est conservé en position totalement ouverte afin de ne pas gêner l'épandage de plein champ.

Dans un mode d'exécution particulier de l'invention, l'une des bielles du ou des battants, ou les deux bielles, ou/et le bras correcteur peuvent être constitués d'un moyen de puissance commandé à distance, par exemple un vérin hydraulique, afin de piloter un angle complémentaire entre les panneaux du battant. Pareille exécution permettra par exemple de rabattre le panneau secondaire vers la caisse de transport lorsque le battant est complètement ouvert ou de moduler l'espace entre les battants et le dispositif d'épandage en cas d'utilisation du volet comme hotte déflectrice pour l'épandage du compost et autres matières organiques légères et friables. En ce cas, l'un des panneaux secondaires est avantageusement pourvu d'une battée sur laquelle le panneau secondaire opposé viendra s'appuyer lorsque le volet est en position fermée, en sorte que la matière ne puisse être projetée entre les deux battants; le panneau secondaire est en outre éventuellement pourvu d'une contre-battée en sorte que le volet puisse former une hotte déflectrice en forme de W, l'angle de jonction des deux battants formant ainsi une sorte de déflecteur triangulaire, séparant et répartissant la matière vers les assiettes inférieures du dispositif d'épandage.

### Description de formes d'exécution préférées de l'invention

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions.

La Figure 1 illustre une phase de travail dans laquelle un épandeur de fumier équipé d'un dispositif d'épandage muni d'un volet selon l'invention est prêt pour l'épandage en plein champ. Elle représente un épandeur de fumier dont on distingue aisément la caisse 1, le train roulant 2, le timon d'attelage 3 et le dispositif d'épandage 4.

Le volet selon l'invention est composé de deux battants 5 et 5', chacun étant lui-même composé d'un panneau primaire 6 et d'un panneau secondaire 7. La largeur des battants 5 et 5' est définie en sorte que leurs largeurs cumulées équivalent au moins à la largeur du dispositif d'épandage 4; dans une forme d'exécution préférée, les battants 5 et 5' sont de largeur égale ou quasi égale.

Les panneaux primaires 6 sont assemblés par une de leurs arêtes verticales à l'extrémité du dispositif d'épandage 4, au moyen d'un dispositif quelconque de charnières 8. Sur leur arête opposée, les panneaux primaires 6 supportent les panneaux secondaires 7 au moyen d'une longue charnière verticale 9 autorisant le pivotement angulaire du panneau secondaire 7 par rapport au panneau primaire 6 et obturant (quasi) hermétiquement l'écart entre le panneau primaire 6 et le panneau secondaire 7.

Dans la configuration illustrée en Figure 1, on distingue aisément que les battants 5 et 5' du volet selon l'invention sont totalement écartés du dispositif d'épandage 4 et que, dans cette configuration, ils ne seront jamais atteints par le flux de matières projetées par le dispositif d'épandage 4. C'est ce que l'on appelle la configuration d'épandage en plein champ.

En Figure 2, le même volet selon l'invention est représenté en position de transport et protection, les battants 5 et 5' du volet étant totalement rabattus contre le dispositif d'épandage 4, dont on ne distingue qu'une faible section supérieure.

On distingue le moyen de puissance, ici un vérin hydraulique 10 asservi au système de puissance hydraulique du tracteur auquel l'épandeur concerné sera attelé, qui permet d'actionner le battant 5. Un vérin hydraulique identique (non visible sur la Figure 2) actionne le battant 5' de manière identique, mais sur un circuit de commande séparé.

Pour orienter les panneaux secondaires 7 dans une position angulaire définie variant suivant la position angulaire de leur panneau primaire 6, un embiellage 11 est disposé entre le cadre du dispositif d'épandage 16 et chaque battant 5 et 5'. Cet embiellage est composé d'une bielle antérieure ou bielle primaire 12, d'une bielle postérieure ou bielle secondaire 13 et d'une bielle centrale ou bras correcteur 14. Ces bielles sont fixées au moyen d'axes quelconques 15 autorisant le pivotement. La bielle antérieure 12 est fixée d'une part au cadre du dispositif d'épandage 16 et d'autre part à une extrémité à la fois de la bielle postérieure 13 et de la bielle centrale 14. L'autre extrémité de la bielle postérieure 13 est fixée au panneau secondaire 7. L'autre extrémité de la bielle centrale 14 est fixée sur le panneau primaire 6. Les fixations aux panneaux 6 et 7 sont réalisées au moyen de supports de bielles 17 ayant une position en saillie, destinée à ne pas gêner la rotation des bielles 12 à 14.

Par contre, c'est la position des supports de bielles 17 sur la largeur des panneaux 6 et 7, combinée avec la longueur des bielles 12, 13 et 14, qui permet d'obtenir une position angulaire relative des panneaux 6 et 7 qui soit variable mais maîtrisée en fonction de l'angle d'ouverture du battant 5 ou 5'.

Ainsi, en Figure 3, on voit que le battant 5 est totalement ouvert et que ses panneaux primaire 6 et secondaire 7 sont quasiment alignés, alors que le battant 5' n'est qu'à moitié ouvert, avec ses panneaux primaire 6 et secondaire 7 formant un angle obtus. Cette configuration correspond à une position de travail en bordure de parcelle (côté battant à moitié ouvert): chaque battant étant commandable séparément, on peut travailler la parcelle indifféremment dans un sens ou dans l'autre.

L'action d'ouverture progressive de l'angle relatif entre les panneaux primaire 6 et secondaire 7 à mesure que les battants 5 et 5' s'ouvrent, se distingue clairement en observant successivement les Figures 4 à 7, représentant des vues en plan du dispositif d'épandage 4 et du volet selon l'invention.

En Figure 4, le volet selon l'invention est complètement fermé en position de transport et/ou protection. En Figure 5, le volet est entrouvert au niveau de chacun des battants à environ 40°-50°. En Figure 6, le volet est ouvert à environ 130°-140°. En Figure 7, le volet est totalement ouvert à plus de 180° dans une position d'épandage en plein champ où les battants 5 et 5' ne gênent pas et ne peuvent nullement retenir ou freiner la projection des matières épandues, simulées par des lignes de projection sur cette figure. Sur les Figures 4 à 7, on observera successivement comment les embiellages 11 règlent la position angulaire relative des panneaux primaire 6 et secondaire 7 à mesure que les battants 5 et 5' sont ouverts: d'un angle relatif d'environ 120° en Figure 4, on passe progressivement à un angle relatif d'environ 180° en Figure 7. L'essentiel étant que le dispositif d'épandage 4 soit correctement obturé et protégé en position fermée du volet selon l'invention, que l'épandage en plein champ ne soit pas gêné en position ouverte du volet selon l'invention et que l'angle relatif fournisse une sorte de rampe déflectrice à la matière lorsque le volet selon l'invention est en position semi-ouverte.

En Figure 8, on illustre ainsi le volet selon l'invention dans une configuration possible de travail en bordure, les matières épandues étant à nouveau simulées par des lignes de projection: ici, c'est le battant 5' qui est position de bordure, le battant opposé 5 étant quant lui en position totalement ouverte. La bordure de parcelle travaillée se situe donc à droite du battant 5': de ce côté, la matière projetée par le dispositif d'épandage 4 est déviée au moyen du battant 5' en sorte qu'elle ne dépasse pas la bordure de parcelle, mais que la portion de matière qui est déviée s'ajoute à celle qui est normalement projetée - soit sans l'action de déviation du panneau « de bordure » - dans les limites de la parcelle. La portion de matière déviée constitue ainsi en quelque sorte le redoublement d'épandage qui est normalement requis pour un bon diagramme d'épandage. Les figures 8', 8" et 8"' illustrent d'autres configurations de travail en bordure du volet selon l'invention parmi la multitude de positions possibles.

Nonobstant le fait que la présente invention a été exposée au moyen d'une description détaillée dans laquelle différents aspects de l'invention ont été explicités, l'homme de l'art comprendra que la portée complète de l'invention n'est nullement limitée aux exemples présentés ici. L'invention a une portée qui est proportionnelle aux revendications du présent brevet, incluant tous éléments ou aspects qui seraient considérés comme équivalents à ceux exposés dans les revendications principales ou dépendantes.

### Liste des repères

- 1.: Caisse de chargement
- 2.: Train roulant
- 3.: Timon d'attelage
- 4.: Dispositif d'épandage
- 5.: Battant
- 6.: Panneau primaire
- 7.: Panneau secondaire
- 8.: Charnière de battant
- 9.: Charnière de panneau secondaire
- 10.: Vérin hydraulique de battant
- 11.: Embiellage
- 12.: Bielle antérieure ou primaire
- 13.: Bielle postérieure ou secondaire
- 14.: Bielle centrale ou bras correcteur
- 15.: Axe de bielle
- 16.: Cadre du dispositif d'épandage
- 17.: Support de bielle

## Revendications

1. Dispositif d'épandage (4) muni d'un cadre fixe, d'organes rotatifs tranchants et éparpilleurs ou hérissons et d'un volet comprenant deux battants articulés (5, 5'), montés pivotants par rapport audit cadre autour d'un axe essentiellement vertical, chacun de ces battants étant constitué d'un panneau primaire (6) et au moins un panneau secondaire (7), le panneau primaire (6) et le ou les panneaux secondaires (7) étant reliés deux par deux par une charnière (9) selon un axe essentiellement vertical également, un moyen de puissance (10) étant associé à l'ouverture et la fermeture de chaque battant (5, 5'), **caractérisé en ce que** ledit dispositif d'épandage comprend un embiellage (11) adapté pour ouvrir de manière continue et indépendante chacun des deux battants articulés (5, 5') vers l'extérieur, d'une position initiale totalement fermée de protection vis-à-vis des hérissons ou de transport à une position finale totalement ouverte pour l'épandage en plein champ, de manière telle que l'angle formé entre le panneau primaire (6) et chacun des panneaux secondaires (7) augmente, respectivement diminue automatiquement lorsque le battant correspondant (5, 5') s'ouvre, respectivement se ferme et que la matière projetée par le dispositif d'épandage ne puisse atteindre les battants (5, 5') en position totalement ouverte.

2. Dispositif d'épandage selon la revendication 1, **caractérisé en ce que** ledit embiellage (11) est composé au moins de biellettes antérieure (12), centrale (14) et postérieures (13), liées entre elles par une de leurs extrémités et liées respectivement au cadre du dispositif d'épandage (4), au panneau primaire (6) et aux panneaux secondaires (7), de sorte que la position angulaire relative des panneaux primaire (6) et secondaires (7) soit déterminée à tout moment, en fonction de l'angle d'ouverture de chaque battant (5, 5').

3. Dispositif d'épandage selon la revendication 1, **caractérisé en ce que** le moyen de puissance (10) est un vérin reliant le cadre au panneau primaire (6).

4. Dispositif d'épandage selon la revendication 2, **caractérisé en ce qu'**au moins une des biellettes (12, 13, 14) est constituée de ou associée à un moyen de puissance commandé à distance et/ou indépendamment du pilotage d'ouverture du battant correspondant (5, 5') par ledit moyen de puissance (10), afin de générer un angle complémentaire entre les panneaux (6, 7) du battant correspondant (5, 5').

5. Dispositif d'épandage selon la revendication 2, **caractérisé en ce que** chaque battant (5, 5') ne comporte qu'un seul panneau secondaire (7) et une seule biellette postérieure (13).

6. Dispositif d'épandage selon la revendication 1, dans lequel le volet fait office de hotte déflectrice pour rabattre la matière projetée vers une table d'épandage inférieure, **caractérisé en ce que**, l'un des panneaux secondaires (7) est muni à son extrémité verticale opposée à la charnière (9) d'une battée sur laquelle le panneau secondaire (7) de l'autre battant pourra s'appuyer, le volet étant en position fermée, ce qui permet de moduler l'espace entre les battants (5, 5') et le dispositif d'épandage tout en empêchant la projection de matière entre les battants (5, 5').

7. Dispositif d'épandage selon la revendication 6, **caractérisé en ce que** le panneau secondaire (7) de l'autre battant est muni, à son extrémité verticale opposée à la charnière (9), d'une contre-battée en sorte que le volet puisse former une hotte déflectrice en forme de W, l'angle de jonction des deux battants formant un déflecteur triangulaire, séparant et répartissant la matière vers des assiettes ou des pales inférieures du dispositif d'épandage.

8. Utilisation d'un dispositif d'épandage selon l'une quelconque des revendications 1 à 5, pour l'épandage de fumier et matières assimilées.

9. Utilisation d'un dispositif d'épandage selon l'une quelconque des revendications 6 et 7, pour l'épandage de compost et matières organiques friables et légères.
